# EUROPEAN PATENT SPECIFICATION

(11) **EP 4 448 390 B1**
(45) Date of publication and mention of the grant of the patent: **28.01.2026**
(21) Application number: 22826181.4
(22) Date of filing: 07.12.2022
(51) Int. Cl.: B64F 5/10, B23K 37/04

(54) **AN INTERFACE NODE FOR A ROBOTIC ARM**
SCHNITTSTELLENKNOTEN FÜR EINEN ROBOTERARM
NOEUD D'INTERFACE POUR UN BRAS ROBOTIQUE

(30) Priority: 17.12.2021 GB 202118348; 17.12.2021 EP 21275189
(43) Date of publication of application: 23.10.2024
(73) Proprietor: BAE SYSTEMS plc, London SW1Y 5AD (GB)
(72) Inventor: MIDDLETON, Daniel James, Preston, Lancashire PR5 6HT (GB); NAYLOR, Robert, Preston, Lancashire PR4 1AX (GB)
(74) Representative: BAE SYSTEMS plc Group IP Department
(86) International application number: PCT/GB2022/053120
(87) International publication number: WO 2023/111517

(56) References cited:
- EP-A1- 3 508 313
- WO-A1-2012/010332
- CA-A1- 2 895 735
- JP-A- 2004 136 316
- JP-A- H04 348 885
- US-A1- 2009 294 071

## Description

### FIELD

The present invention relates to an attachment for a robotic arm that enables the robotic arm to be used as a reconfigurable fixture for vehicle manufacture and a method of using such an attachment as a reconfigurable fixture for vehicle manufacture.

### BACKGROUND

Vehicle manufacture, and particularly, air vehicle manufacture traditionally requires complex manufacturing technologies commensurate with the complexity of the product being constructed. Conventional approaches to the location of individual elements of the vehicle usually rely on very expensively designed and manufactured "bespoke" fixtures. These fixtures have been meticulously constructed using very accurate metrology equipment. These fixtures attract a significant non-recurring and recurring cost penalty for their accuracy, can be very limited in their flexibility, and due to their bespoke nature tend to have a certain "shelf life" of use which then attracts further costs of disposal of the fixtures.

By way of example, US2009294071 discloses an apparatus for welding a plastic component to a body's aperture. The apparatus comprises a frame element, a first heating head mounted to the frame element for heating the component, a gripper for gripping the component and for mounting the component to the body's aperture, a heater arm having a second heating head mounted thereto for heating the body's aperture, and an actuator for mounting both the heater arm and the gripper to the frame element for alternating between a heating position.

JPH04348885 discsloses a robot having a shaft part and a hole part which are fitted to each other, one of which is fixed so as not to move, and the other part which is a robot arm. There is also disclosed a method of fitting position detecting in a component assembling operation using a robot. The method comprises assemblinbg the two components by gripping and moving with a gripper provided at a tip of the robot so as to fit the shaft portion and the hole portion.JP2004136316 discloses a friction stir spot welding apparatus for spot joining aluminum plates, and more specifically, by rotating and rotating a rotating tool with a protruding tip. The invention relates to a friction stir spot welding device for joining by frictional heat.

### SUMMARY

According to an aspect of the present invention, there is provided an interface node for enabling a robotic arm to be used as a reconfigurable fixture for vehicle manufacture. The interface node comprises an attachment element for attaching the interface node to the robotic arm. The interface node also comprises a first locating element, the first locating element comprising a flat surface wherein the flat surface is suitable for locating a first feature of a component of a vehicle wherein the first feature comprises a face of a component of a vehicle. The interface node further comprises a wall extending from and substantially around the flat surface, the wall connecting the flat surface to the attachment element wherein the wall defines a second locating element, the second locating element suitable for locating a second feature of a component of a vehicle.

The interface node further comprises a third locating element wherein the third locating element comprises one or more holes in the flat surface wherein each hole of the one or more holes is suitable for locating a third feature of a component of a vehicle wherein the third feature of a component of a vehicle comprises a point of a component of a vehicle. The one or more holes may comprise a hole at the centre of the flat surface. The one or more holes may be either screw holes or hollow cones. The one or more holes may comprise an array of screw holes and, optionally, the array of screw holes may comprise one or more of a 4mm screw hole, a 5mm screw hole, a 6mm screw hole and a 7mm screw hole.

In some examples, the second feature of a component of a vehicle is an edge of a component of a vehicle, the flat surface is circular, the wall is cylindrical, the second locating element is the cylindrical wall and a tangent to the cylindrical wall can be used to locate the edge of the component of a vehicle. In other examples the second feature of a component of a vehicle is a corner of a component of a vehicle, the flat surface is a rectangle, the wall is a rectangular prism, and the second locating element is a corner on the wall or a corner joining the flat surface to the wall wherein the corner on the wall or joining the flat surface and the wall can be used to locate the corner of the component of a vehicle.

In some examples, the attachment element is on an opposite side of the interface node to the flat surface. In other examples, the attachment element is connected to the wall of the interface node, and optionally, the interface node may further comprise a fourth locating element opposite the flat surface. The fourth locating element may comprise a cup suitable for locating a fourth feature of a component of a vehicle wherein the fourth feature comprises a cone.

In some examples, the attachment element comprises a clamp up location for clamping the interface node to the robotic arm, and a datum face for ensuring a known interface point between the robotic arm and the interface node.

According to another aspect of the present invention, there is provided a device for use as a reconfigurable support for vehicle manufacture. The device comprises a robotic arm wherein the robotic arm can be moved in 6 degrees of freedom, and an interface node such as the interface nodes described above wherein the interface node is connected to the robotic arm via the attachment element of the interface node.

According to a further aspect of the present invention, there is provided a method for locating a component of a vehicle relative to a vehicle build volume. The method comprises identifying a first feature of the component wherein the first feature of the component needs to be located to a desired position relative to the vehicle build volume. The method also comprises selecting a first locating element of an interface node connected to a robotic arm wherein the interface node comprises one or more locating elements wherein each locating element of the one or more locating elements is for locating a feature of a component of the vehicle and the first locating element is selected from the one or more locating elements to be suitable for locating the first feature of the component. The method further comprises determining a locating position for the first locating element based on the desired position of the first feature of the component. The method also comprises moving the interface node using the robotic arm to position the first locating element at the locating position. The method further comprises positioning the component relative to the vehicle build volume using the first locating element to locate the first feature of the component and hence the component with respect to the vehicle build volume.

The one or more locating elements comprise at least one of a flat surface, a corner, a hole, a circular wall, and a cup and the first feature of the component comprises at least one of a face, a corner, a point, an edge, and a cone. Selecting the first locating element of the one or more locating elements on the interface node based on the first feature of the component may comprise: if the first feature of the component is a face selecting a flat surface of the interface node as the first locating element; if the first feature of the component is a corner selecting a corner of the interface node as the first locating element; if the first feature of the component is a point selecting a hole of the interface node as the first locating element; if the first feature of the component is an edge selecting a circular wall of the interface node as the first locating element; and if the first feature of the component is a cone selecting a cup of the interface node as the first locating element.

In some examples, the method may further comprise selecting the interface node from one of several interface nodes based on the first feature of the component wherein each of the several interface nodes comprise either different locating elements or differently sized locating elements.

In some examples, the method may comprise attaching the interface node to the robotic arm.

In some examples, positioning the component relative to the vehicle build volume further may comprise using the locating element to support the component in the desired position. The first feature may comprise a face, the first locating element may comprise a flat surface, and using the first locating element to support the component in the desired position may comprise supporting the face of the component on the flat surface of the interface node. The first feature may comprise a hole, the first locating element may comprise a screw hole, and using the first locating element to support the component in the desired position may comprise using a screw fitting to attach the component to the interface node via the hole and the screw hole. The first feature may comprise a cone, the first locating element may comprise a cup, and using the first locating element to support the component in the desired position comprises positioning the cone in the cup.

In some examples, the method may further comprise attaching the component to the vehicle build volume so that that component is supported by the vehicle build volume and moving the interface node away from the locating position using the robotic arm.

In some examples, the method may further comprise identifying a second feature of a second component that needs to be located to a second desired position relative to the vehicle build volume. The method may further comprise selecting a second locating element of the one or more locating elements on the interface node based on the second feature of the second component. The method may also comprise determining a second locating position for the second locating element based on the second desired position and moving the interface node using the robotic arm to position the second locating element at the second locating position. The method may also comprise positioning the second component relative to the vehicle build volume using the second locating element to locate the second feature of the second component and hence the second component with respect to the vehicle build volume. In some examples, the first and second locating element may be the same. However, in other examples the first and second locating element may be different.

In some examples, moving the interface node using the robotic arm to position the locating element at the locating position may comprise using the robotic arm to move the interface node in 6 degrees of freedom to drive the interface node such that the locating element is moved to the locating position.

### BRIEF DESCRIPTION OF THE FIGURES

Embodiments of the invention will now be described by way of example only with reference to the figures, in which:
Figure 1 shows a cross-sectional view of an interface node in accordance with examples of the description;
Figure 2 shows a perspective view of an interface node in accordance with examples of the description;
Figure 3 shows a perspective view of an interface node in accordance with examples of the description;
Figure 4 shows a perspective view of an interface node in accordance with examples of the description;
Figure 5 shows a plan view of an interface node being used to align/position an edge of a component in accordance with examples of the description;
Figure 6 shows a perspective view of an interface node in accordance with examples of the description;
Figure 7 shows a perspective view of an interface node with an alternative attachment element in accordance with examples of the description;
Figure 8 shows a perspective view of an interface node with an attachment element extending from a side wall of the interface node in accordance with examples of the description;
Figure 9 shows an interface node being used to position/locate a component with respect to a vehicle build volume in accordance with examples of the description;
Figure 10 shows a flow chart showing a method of using an interface node in accordance with examples of the description;

### DETAILED DESCRIPTION

This application relates to an attachment for a robotic arm that enables the robotic arm to be used as a third hand when positioning components for vehicle assembly, and in some examples air vehicle assembly. The attachment can also be known as a fixturing node, an interface node, an interface element, a fixturing element, a support element, or a support node.

In one example, an interface node for aiding in the building of a vehicle, such as an air vehicle, is provided. While the vehicle is being manufactured, it can exist in a partially built state known as a vehicle build volume or vehicle assembly. The interface node is designed to be connected or attached to a robotic arm or other suitable industrial robotics. To this end, the interface node comprises an attachment element for attaching the interface node to a robotic arm or other suitable form of industrial robotics. The attachment element can also be known as an attachment fixture, attachment fitting or attachment means. As well as comprising an attachment element, the interface node comprises one or more locating elements. The locating elements can also be known as locating features, locating means, or locating components. Each locating element from the one or more locating elements is suitable for locating, positioning, or picking up on a feature of a component for the vehicle. In other words, when the interface node is in a suitable position compared to the vehicle build volume and/or the partially complete vehicle, each locating element can be used to align/position a feature of a component of a vehicle to a desired position so that the feature of the component can be placed in a desired position compared to the vehicle build volume and/or partially complete vehicle. This means the component can be positioned correctly compared to the vehicle build volume. The desired position can be a position that ensures the component of the vehicle is positioned correctly compared to another part/component of the vehicle which forms part of the vehicle build volume or partially complete vehicle.

In another example, a method of using an interface node, such as the interface node described above is provided. The method comprises identifying a feature of a component of the vehicle that needs to be positioned with respect to a vehicle build volume in order to enable the component to be attached or otherwise form part of the vehicle build volume. In another example, the interface node could be used to support components during vehicle disassembly. The method comprises selecting a locating element from one or more locating elements on an interface node that is connected to a robotic arm. The locating element is chosen to be suitable for locating/aligning/positioning the identified feature of the component. For example, the form of locating element selected depends on the form of the identified feature such that the selected locating element and the identified feature correspond and/or are compatible. A locating element and an identified feature correspond when the locating element can be used to position/align that feature. The locating element can be chosen to be suitable to assist an end goal of positioning/locating/aligning the identified feature of the component. Examples of corresponding locating elements and features are described later. The method then comprises using the robotic arm to position the selected locating element at a position that is suitable for positioning the identified feature with respect to the vehicle build volume. This position can be determined based on a desired position of the feature of the component with respect to the vehicle build volume which in turn can be determined based on a desired position of the component with respect to the vehicle build volume. In some examples, the desired position may also be based on the size and shape of the component and/or the relative position of the feature of the component and the locating element on the interface node. Using the robotic arm can allow the interface node to be moved accurately in six degrees of freedom with respect to the build volume. The interface node can be driven by the robotic arm into the correct position. Once the interface node has been positioned, the selected locating element is then used to align/position/locate the identified feature of the component. In some examples this can involve using the locating element to support or otherwise hold the component. However, in addition or as an alternative, an additional support can be used to hold the component. The component can then be attached to the vehicle build volume and, once the component has been attached, the robotic arm can be used to move the interface node away from the component (after any disconnection of the component from the interface node where necessary). The interface node may then be reused to align/locate/position a second component with respect to the vehicle build volume using a second feature of the second component.

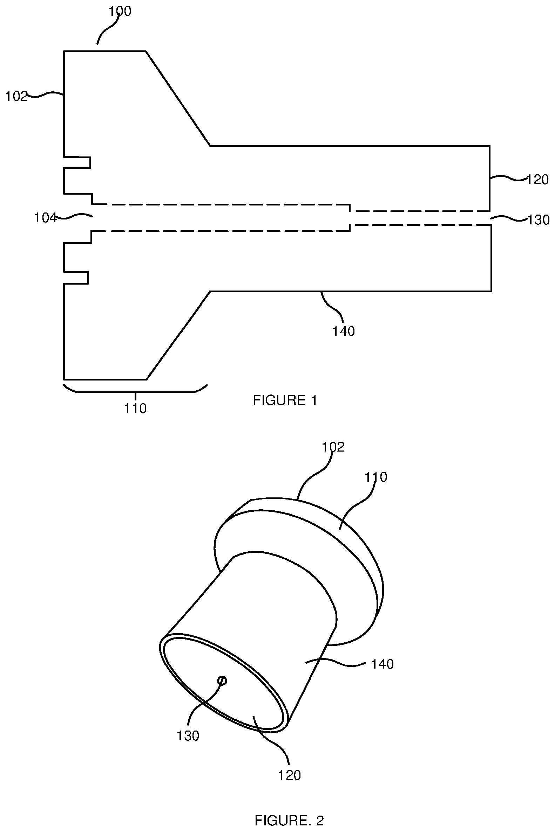

Figure 1 shows a cross section of an example interface node that has an attachment element 110, and three locating elements 120, 130 and 140. The locating elements comprise, a flat circular surface 120, a hole in the flat circular surface 130 and an outer edge of a cylindrical wall 140. The cylindrical side wall 140 extends from and substantially around the flat circular surface 120. In other words the flat circular surface 120 forms an end of cylindrical wall 140 to form one end of a cylinder. In the example shown in Figure 1 there is no lip between the flat circular surface 120 and the cylindrical wall 140. This lack of lip may aid using the flat surface 120 as an alignment feature. However, in other examples, a lip may be present. As shown in Figure 2, the connection between the flat circular surface 120 and the cylindrical wall 140 may be chamfered. This can result in no sharp edge, which in turn may ensure the node does not impact any wear on the component being located. The attachment element 110 is on an opposite end of the cylindrical wall 140 to the flat circular surface 120. In other words, the cylindrical wall 140 may extend between the flat circular surface 120 and the attachment element 110. However, in other examples, the attachment element 110 can extend from cylindrical wall 140 enabling a surface opposite the flat circular surface 120 to be used as an additional locating element. The attachment element 110 comprises a datum face 102 and a clamp up location 104. The datum face 102 extends beyond the cylindrical wall 140 and is governed by an interface of the robotic arm so that the interface node 100 and the robotic arm mate cleanly and accurately. The clamp up location can comprise a hole to receive a bolt or other attachment feature. In other examples, the bolt or attachment feature may be in position or form part of the interface node 100 as manufactured. The skilled person would understand that the attachment element 110 described with respect to Figure 1 is purely exemplary and other attachment elements could be used depending on the robotic arm and the attachment features of the robotic arm.

Figure 2 shows a perspective view of the interface node 100 of Figure 1. In Figure 2 the locating elements 120, 130 and 140 are visible. As mentioned above, attachment element 120 comprises a flat circular surface 120. This flat circular surface can be used to align/locate/pick up a face of a component of the vehicle that needs to be positioned with respect to the vehicle build volume. The use of a flat surface can enable alignment of a face of a component. The flat surface in Figure 2 is circular since this can make it easier to have cylindrical wall 140.

Attachment element 130 comprises a hole 130, which in some examples can be a screw hole. This hole 130 can be used to align/locate/pick up on a point of a component of a vehicle that needs to be positioned with respect to the vehicle build volume. Hole 130 may be a screw hole, plain hole, blind hole, through hole, threaded hole, counterbored hole, countersunk hole etc. Hole 130 may enable accurate location/positioning of a point of a component by aligning the point of the component with the hole 130. In some examples, this point can be a hole in the component of the vehicle. This may allow hole 130 to be used for support as well as alignment. In the example shown in Figure 2, the hole is at the centre of flat circular surface 120. This can aid in manufacture of the interface node 100 since it enables the hole 130 and the clamp up location 104 to be manufactured together. However, in other examples the hole 130 and clamp up location 104 may not join. In other examples (not shown) instead of a single hole at the centre of flat circular surface 120 an array of holes may be present. In some examples, one of these holes may be at the centre of flat circular surface 120.

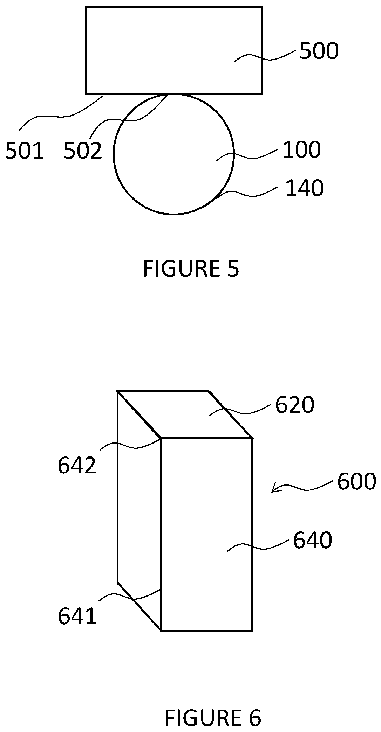

Attachment element 140 comprises the cylindrical wall 140. The use of a cylindrical wall 140 enables alignment of an edge of a component. As shown in Figure 5, a tangent to the cylindrical wall 140 can be used to align/locate/pick up on an edge 501 of a component 500 of a vehicle to be positioned with respect to the build volume of the vehicle. When an edge 501 of a component 500 is positioned on the cylindrical wall 140, the edge 501 sits at a tangent to the cylindrical wall 140. This ensures a point 502 of the edge 501 is positioned/located accurately compared to the interface node 100 and hence compared to the build volume for the vehicle. For example, the point of contact of any item located onto a cylindrical face is known as the "smallest footprint of interface area" and this can be used to enable accurate alignment.

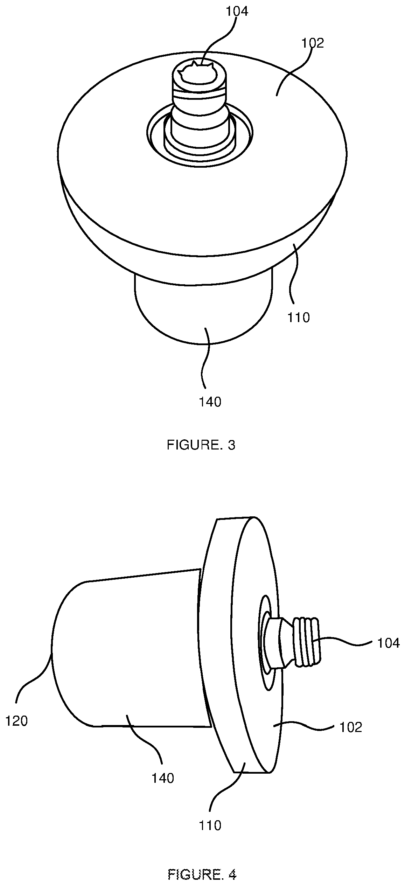

Figure 3 shows a perspective view of interface node 100. Figure 4 shows another perspective view of interface node 100. Both of these Figures show the attachment element 110 of the interface node 100. The attachment element 110 may comprise a zero-point clamp. As shown in Figure 4, the attachment element 110 of the interface node 100 comprises a datum face 102 and a clamp up location 104. The datum face can provide a known interface point to enable connection of the interface node 100 to a robotic arm via a robot end effector. The datum face can provide a fixed starting point for the interface node 100. The clamp up location can enable the interface node 100 to be connected to the robotic arm and can accommodate the particular interfaces of the robotic arm be used. This attachment element 110 enables the interface node 100 to be connected to a robotic arm or other industrial robotics (not shown). The attachment element 110 described above is purely exemplary and other attachment elements may be used dependent upon the nature of the robotic arm/industrial robotics the interface node 100 is designed to connect to.

While the interface node 100 has been described as having a flat circular surface 120 and a cylindrical wall 140, the skilled person would understand that the flat surface and wall may have other geometries and may not be circular and cylindrical. For example, as shown in Figure 6, the flat surface 620 of the interface node 600 may be rectangular (including square) and the wall 640 may comprise a rectangular (including square) prism. The join between the flat surface 620 and the wall 640 may be chamfered. One or more holes may be present in the flat surface 620. In this example, rather than using the wall as locating element 640, a corner on the wall 641 or between the wall and the flat surface 642 may act as a locating element. In this case the locating element may be used to locate a feature of the component wherein the feature comprises a corner. Other shapes of flat surface and side wall could be used dependent upon the feature of the component to be aligned. For example, for a feature of a component comprising a corner wider or narrower than 90°, a shape of the flat surface and side wall could be chosen accordingly.

Similarly, while the interface node 100 is described as having a central hole 130 that can comprise a screw hole, in some specific use cases the interface node 100 can instead comprise a cup such as a cone shaped cup that can be used to align a feature of a component of the vehicle comprising a cone to enable alignment of the cone compared to the vehicle build volume. In other examples the interface node 100 can comprise a protrusion and the feature of the component can comprise a matching cup in a shape other than a cone. In further examples, instead of a hole, a protrusion may be used as an alignment element in the interface node 100 to align with a corresponding/matching cup of the component. Alternatively, instead of a central hole 130, the flat surface 120 may comprise multiple holes such as an array of holes. These holes may comprise screw holes, basic circular holes, plain holes, blind holes, through holes, threaded holes, counterbored holes, countersunk holes or cups etc. of different sizes to enable the alignment of different sized hole, point, or protrusion features of a component. When an array of screw holes is used, the array of screw holes may comprise screw holes of at least one of 4mm, 5mm, 6mm and 7mm.

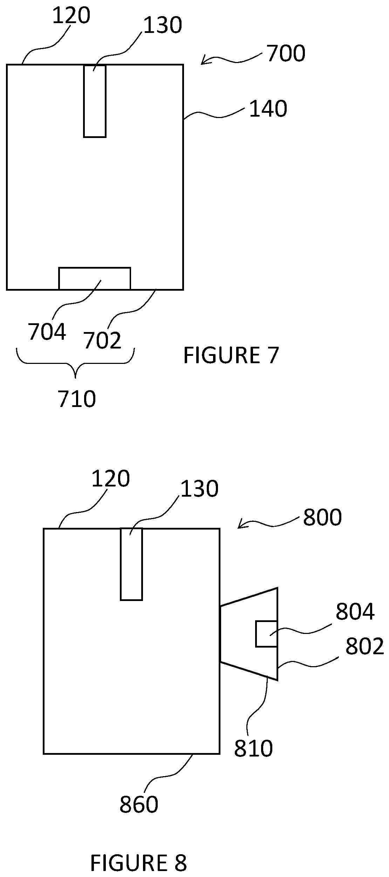

While an example attachment element has been described above, other attachment elements could also be used. For example, as shown in Figure 7, the attachment element 710 of interface node 700 may be integral with side wall 140 instead of extending beyond side wall 140. The attachment element may still comprise clamp up location 704 and datum face 702. In addition, as shown in Figure 8, while the attachment element 110 is described as being on the opposite end of the wall 140 to the flat surface 120, in some examples the attachment element 810 of interface node 800 may extend from the wall 140. The attachment element 810 may still comprise clamp up location 804 and datum face 802. The surface 860 opposite flat surface 120 can then be used to contain another locating element. For example, this other locating element can be a cup used to locate/align/position a cone of a component of the vehicle. The locating element at 860 could also be another flat surface or another suitable location element.

In addition to the interface node 100, a further example described herein comprises a device for use as a reconfigurable support or as a reconfigurable alignment feature/fixture when building a vehicle, such as an air vehicle, or conducting vehicle, or air vehicle, manufacture. The device comprises an interface node 100 such as the interface node described above and a robotic arm or other suitable industrial robotics. The interface node 100 is connected to the robotic arm via the attachment element 110 of interface node 100. For example the attachment element 110 can be a zero-point clamp or other fixing used to connect the interface node 100 to a robotic arm via a robot end effector.

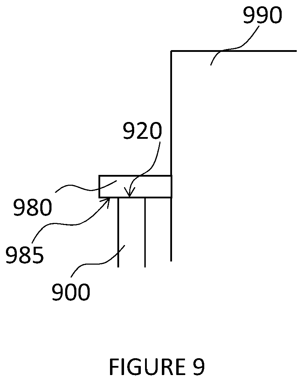

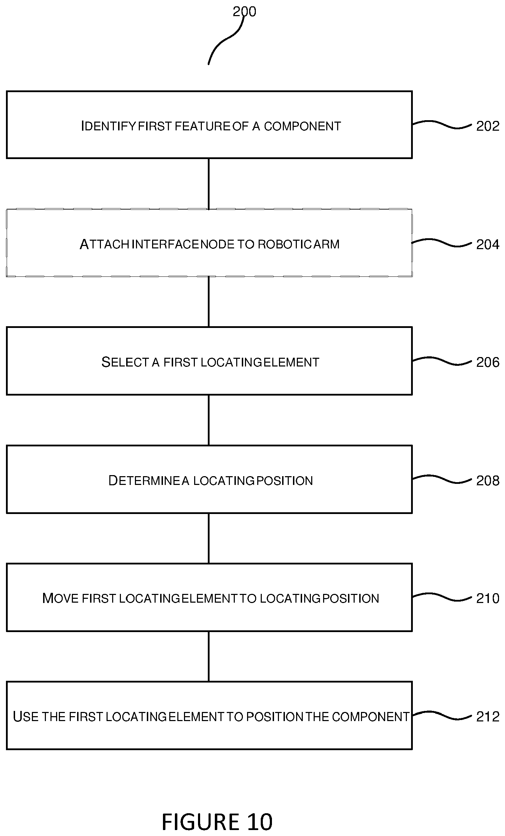

As shown in Figures 9 and 10, a method 200 of using an interface node such as interface node 100 mentioned above will now be described. Figure 9 shows an interface node 900 being used to position/align component 980 with vehicle build volume/vehicle build assembly/partially complete vehicle 990. In the example shown in Figure 9 a flat surface 920 of interface node 900 is used as the alignment element. However, the skilled person would understand this is exemplary and other alignment elements could be used. Figure 10 is a flowchart illustrating method 200. In step 202, a component 980 of a vehicle that needs to be positioned with respect to a build volume 990 of the vehicle is identified. The build volume 990 can be a build assembly or a vehicle part way through manufacture. This component 980 can be identified based on a plan of the vehicle or in any other suitable way. This component 980 is the component that the interface node 900 will be used to position/locate and represents a component a user wishes to position or locate with respect to the build volume/vehicle assembly 990 as part of vehicle manufacture or otherwise. In step 202, a first feature of the component 980 is also identified. The first feature represents a feature of the component 980 that needs to be positioned to a desired position with respect to the build volume 990 to ensure the component is in the correct position. The feature of the component 980 can be identified based on a plan of the vehicle or in any other suitable way. The feature of the component 980 represents a feature of the component the user wishes to position or locate with respect to the build volume 990 or other partially complete vehicle to ensure the component is in the correct position with respect to the vehicle build volume or partially complete vehicle.

In optional step 204, the interface node 900 is connected to a robotic arm or other industrial robotics using an attachment element such as attachment element 110. The interface node 900 comprises one or more locating elements such as locating elements 120, 130 and 140 described above. While in some examples this may form part of the method, the skilled person would understand that in other examples the interface node 900 may have been attached to the robotic arm or other industrial robotics before the start of the method.

The method 200 continues at step 206 where a first locating element of the one or more locating elements 120, 130, 140 on the interface node 900 is selected. The first locating element is selected based on the first feature of the component 980 such that the first locating element is suitable for locating/aligning/positioning the first feature of the component 980. For example, if the first feature of the component 980 is a face then a flat surface, such as flat surface 120 is chosen as a suitable first locating element. Similarly, if the first feature of the component is an edge, then a cylindrical or circular wall such as cylindrical wall 140 is chosen as the first locating element. In another example, if the first feature of the component is a point, for example a hole or other point, then hole 130 can be chosen as the first locating element. In all cases, the first locating element is chosen to be suitable for aligning/positioning/locating the first feature of the component and the first locating element and the first feature can be considered to correspond.

At step 208, the method 200 comprises determining a locating position of the first locating element based on the desired position of the feature of the component 980. As discussed above, the desired position reflects the position the first feature of the component 980 needs to be placed at in order to ensure the component is in a correct position with respect to the vehicle build volume 990. The desired position can be obtained from a plan of the vehicle, other details of the vehicle build or in any other suitable way. The locating position can then be determined based on the desired position. The locating position reflects a position at which the first locating element needs to be moved to/held or otherwise placed in to ensure that when the first locating element is used to locate/align/position the first feature of the component is in the desired position with respect to the vehicle build volume. In some examples, the desired position and locating position may be determined by a computer that calculates the desired position and locating position based on other components in the vehicle build volume and information about the final vehicle such as a plan of the vehicle. This increases the accuracy of the determined desired position and locating position and thus aids the use of the interface node to accurately position/locate components when building high precision vehicles.

The method then comprises, at step 210, moving the interface node 100 using the robotic arm or other industrial robotics so that the first locating element is in the locating position. This may be done automatically by a control system of the robotic arm or other industrial robotics to ensure the interface node 100 is positioned accurately. The robotic arm may move in six degrees of freedom (6DOF) and positioning the interface node may comprise moving the interface node in any of these 6DOF. The 6DOF may be movement along an X, Y and Z axis and pitch (movement between the X and Y axes), yaw (movement between the X and Z axes) and roll (movement between the Z and Y axes). The datum face can provide a known interface point to enable connection of the interface node 900 to a robotic arm via a robot end effector. The robotic arm may determine how to position/locate locating elements based on knowledge of a physical design of the interface node 900 and its key features and an imaginary robotic point by which the robot is driven around which is called the "robot tool centre point or TCP".

Once the interface node 900 and the first locating element have been accurately positioned with respect to the vehicle build volume 990 or partially complete vehicle assembly/partially complete vehicle, the method 200 comprises at step 212, using the first locating element to locate/position/align the first feature of the component 980. This enables the first feature of the component 980, and hence the component 980 itself to be positioned/aligned/located with respect to the vehicle build volume 990. The use of the first locating element depends on the form of the first locating element and the first feature of the component 980.

For example, as shown in Figure 9, when the first feature of the component 980 is a face 985, then the face 985 can be aligned to the flat surface locating element 920. In some examples, this can involve resting the face 985 on the flat surface 920 so that the flat surface 920 supports the face 985 and the component 980. Therefore, further support may not be needed and the interface node 900 can be used to both align/position and support the component 980. However, in other examples, while the face 985 can be aligned or positioned on or adjacent to the flat surface 920, the flat surface 920 acts as an alignment and further support may be needed to hold the component in position.

When the first feature of the component is a point, such as a hole, then the point can be aligned to the hole 130 locating element. This can involve aligning the point with the hole 130 or the centre of the hole 130. When the point on the component is itself a hole and locating element hole 130 is a screw hole, this can involve using a screw to fix the component in place and hence support the component. In other examples, the hole 130 of the locating element and the hole of the component can be affixed using other means. In addition, a point on the component can be aligned to a hole 130 and the component can be supported on the flat surface 920 of the interface node 900 during the alignment. Thus, in the above examples, the interface node 100 can be used to both align/position and support the component. However, in other examples, while the point can be aligned to the hole alignment element 130, the hole alignment element 130 acts as an alignment and further support may be needed to hold the component in position.

When the first feature of the component is an edge, the edge can be aligned at a tangent to the cylindrical wall alignment component 140 enabling an accurate point alignment as described with respect to Figure 5. This may involve using a further support to hold the component in position.

Once the component has been aligned to the vehicle build volume using the first feature of the component and the first alignment element of the interface node, the component can be fixed in position with respect to the vehicle build volume e.g. using a screw, rivet, bolt etc. The component can then be fully supported by the vehicle build volume. If the first feature of the component has been supported by the first locating element, any connections or attachments between the component and the interface node can then be undone. The robotic arm or other industrial robotics can then be used to move the interface node away from the locating position and hence the vehicle build volume leaving the component in place. The above method can then be repeated with a second feature on a second component so that a second component can be positioned with respect to the vehicle build volume.

In some examples, the above method 200 may further comprise a step of selecting an interface node 100 from several interface nodes. In this case, each interface node 100 of the several interface nodes may comprise differently sized locating elements. For example, the flat surface 120 on each interface node 100 may be a different size to enable support of differently sized faces of components of the vehicle. In another example, the hole 130 on each interface node 100 may be a different size to enable the alignment of differently sized holes or points on components. In addition or as an alternative, each interface node 100 of the several interface nodes may comprise different locating elements. For example, one interface node may comprise a circular flat surface 120 and a cylindrical wall 140 while another interface node may comprise a rectangular (including square) flat surface and a rectangular prism (including a square prism) wall. An interface node can then be chosen based on whether the user wishes to align an edge feature of a component of a vehicle or a corner feature of a component of a vehicle.

In addition, while the method above has been described with respect to features of a component that comprise faces, points and edges, the skilled person would understand that depending on the interface component other features of a component can be aligned. For example, if the first feature of the component is a corner then a corner of the interface node 100 can be selected as the first locating element. This corner may be on a rectangular (including square) prism of a wall of the interface node 100 or be between a rectangular flat surface (including square) and a rectangular prism (including square prism) wall of the interface node. To use the corner as a locating element, the corner that is the first feature of the component can be aligned with the corner that is the first locating element of the interface node 100. Similarly, if the first feature of the component is a cone, then a corresponding/matching cup of the interface node 100 can be selected as the first locating element. The cup may be formed in the flat surface 120 or may be in a surface opposite flat surfaced 120. Aligning/locating the cone of the component with the cup of the interface node 100 may comprise positioning the cone of the component in the cup of the interface node 100.

The use of an interface node 100 and the method 200 described above is highly versatile. Given the interface node 100 comprises flexible locating elements such as flat surfaces 120, holes 130 and circular/cylindrical walls 140, the locating elements can be used to align general features of a component such as faces, points and edges. Thus, there is no need to design and use specific jigs/alignment tools for each component and/or each feature that needs to be aligned or even for each type of feature that needs to be aligned. The interface node 100 can be used for multiple vehicles and/or types of vehicles removing the need for a specific jig or alignment tool per vehicle. In addition, in many examples, the interface node 100 comprises multiple different locating elements. Thus, the same interface node can therefore be used to align different features of components. In addition, since the interface node 100 is designed to connect to a robotic arm or other industrial robotics via a robot end effector, the interface node 100 can be accurately repositioned. The interface node 100 and the method 200 can therefore be used to act as a support for multiple different components at different times based on different features of the components. Unlike conventional bespoke fittings and jigs, this allows easy adaption of the supports/alignment fixtures for positioning components with respect to a vehicle build volume. This allows easy adaptation to redesign of the vehicle and also enables the addition of bespoke features to a vehicle without the requirement to make bespoke jigs/fixtures for building the vehicle.

The attachment/interface node of the above examples aids in being able to accurately locate and maintain that accuracy of particular unsupported air vehicle components during the vehicle assembly process. In one example, industrial robotics is used, and a particularly designed interface node is attached to the industrial robotics that would allow technology engineers the ability to flexibly interface with typical features of air vehicle products. These features typically are holes, faces and points on surfaces (tangential interfacing) of components. The example involves accurately "driving" the node digitally to desired positions in the air vehicle build volume such that the once unsupported component can be digitally fixed in position via the accurate location of the interface node prior to the final assembly of that component to its adjacent components and so becoming "self-supporting". The interface node is infinitely programmable, product agnostic in nature and as such allows for late vehicle design incorporation without the traditional costly redesign of the aforementioned "bespoke" fixturing solutions. The all-encompassing principle of this application is the transition to a more digitally secured build methodology for next generation air vehicles, but this approach could be adopted across a myriad of industrial sectors.

## Claims

1. An interface node (100; 600; 700; 800; 900) for enabling a robotic arm to be used as a reconfigurable fixture for vehicle manufacture, the interface node comprising:
an attachment element (110; 710; 810) for attaching the interface node to the robotic arm;
a first locating element comprising a flat surface (120, 620; 920), wherein the flat surface is suitable for locating a first feature of a component (980) of a vehicle wherein the first feature comprises a face (985) of a component of a vehicle;
a wall (140) extending from and substantially around the flat surface, the wall connecting the flat surface (120, 620; 920) to the attachment element (110; 710; 810), wherein the wall (140) defines a second locating element, the second locating element suitable for locating a second feature of a component of a vehicle; **characterised in that** the interface node comprises:
a third locating element comprising one or more holes (130) in the flat surface (120, 620; 920), wherein each hole of the one or more holes (130) is suitable for locating a third feature of a component of a vehicle, and the third feature of a component of a vehicle comprises a point of a component of a vehicle.

2. The interface node (100; 600; 700; 800; 900) of claim 1 wherein:
the second feature of a component of a vehicle is an edge (501) of a component (500) of a vehicle;
the flat surface is circular (120);
the wall is cylindrical (140); and
the second locating element is the cylindrical wall (140) and a tangent to the cylindrical wall can be used to locate the edge of the component of a vehicle.

3. The interface node (100; 600; 700; 800; 900) of any of claims 1 to 2 wherein:
the second feature of a component of a vehicle is a corner of a component of a vehicle;
the flat surface is a rectangle (620);
the wall is a rectangular prism (640); and
the second locating element is a corner on the wall (641) or a corner joining the flat surface to the wall (642) wherein the corner on the wall (641) or joining the flat surface and the wall (642) can be used to locate the corner of the component of a vehicle.

4. The interface node (100; 600; 700; 800; 900) of any of claims 1 to 3 wherein:
the attachment element (110; 710) is on an opposite side of the interface node to the flat surface (120).

5. The interface node (100; 600; 700; 800; 900) of any of claims 1 to 4 wherein the attachment element comprises:
a clamp up location (104; 704; 804) for clamping the interface node to the robotic arm; and
a datum face (102; 702; 802) for ensuring a known interface point between the robotic arm and the interface node (100; 600; 700; 800; 900).

6. A device for use as a reconfigurable support for vehicle manufacture, the device comprising:
a robotic arm wherein the robotic arm can be moved in 6 degrees of freedom; and
an interface node (100; 600; 700; 800; 900) according to any of claims 1 to 5 wherein the interface node is connected to the robotic arm via the attachment element of the interface node.

7. A method (200) for locating a component (980) of a vehicle relative to a vehicle build volume (990), the method comprising:
identifying (202) a first feature of the component (980) wherein the first feature of the component (980) needs to be located to a desired position relative to the vehicle build volume (990);
selecting (206) a first locating element of an interface node (100; 900) connected to a robotic arm wherein the interface node (900) comprises one or more locating elements (120, 130, 140; 620, 641, 642; 920) wherein each locating element of the one or more locating elements (120, 130, 140; 620, 641, 642; 920) is for locating a feature of a component of the vehicle and the first locating element is selected from the one or more locating elements (120, 130, 140; 620, 641, 642; 920) to be suitable for locating the first feature of the component (980);
determining (208) a locating position for the first locating element based on the desired position of the first feature of the component (980);
moving (210) the interface node (100; 900) using the robotic arm to position the first locating element at the locating position; and
positioning (212) the component (980) relative to the vehicle build volume (990) using the first locating element to locate the first feature of the component (980) and hence the component (980) with respect to the vehicle build volume (990), wherein:
the one or more locating elements comprise at least one of a flat surface (120; 620), a corner (641; 642), a hole (130), a circular wall (140), and a cup;
the first feature of the component comprises at least one of a face, a corner, a point, an edge (501), and a cone; and
selecting (206) the first locating element of the one or more locating elements on the interface node based on the first feature of the component comprises:
if the first feature of the component is a face selecting a flat surface (120; 620) of the interface node as the first locating element;
if the first feature of the component is a corner selecting a corner (641; 642) of the interface node as the first locating element;
if the first feature of the component is a point selecting a hole (130) of the interface node as the first locating element;
if the first feature of the component is an edge (501) selecting a circular wall (140) of the interface node as the first locating element; and
if the first feature of the component is a cone selecting a cup of the interface node as the first locating element.

8. The method (200) of claim 7 wherein positioning the component relative to the vehicle build volume further comprises:
using the locating element to support the component in the desired position.

9. The method (200) of claim 8 wherein:
the first feature comprises a face (985);
the first locating element comprises a flat surface (920); and
using the first locating element to support the component in the desired position comprises supporting the face of the component on the flat surface of the interface node.

10. The method (200) of claim 8 or claim 9 wherein:
the first feature comprises a hole;
the first locating element comprises a screw hole (130); and
using the first locating element to support the component in the desired position comprises using a screw fitting to attach the component to the interface node via the hole and the screw hole.

11. The method (200) of any of claims 7 to 10 further comprising:
attaching the component (980) to the vehicle build volume (990) so that that component (980) is supported by the vehicle build volume (990); and
moving the interface node (900) away from the locating position using the robotic arm.

12. The method (200) of any of claims 7 to 11 further comprising:
identifying (202) a second feature of a second component that needs to be located to a second desired position relative to the vehicle build volume;
selecting (206) a second locating element of the one or more locating elements (120, 130, 140; 620, 641, 642; 920) on the interface node (900) based on the second feature of the second component;
determining (208) a second locating position for the second locating element based on the second desired position;
moving (210) the interface node (900) using the robotic arm to position the second locating element at the second locating position; and
positioning (212) the second component relative to the vehicle build volume using the second locating element to locate the second feature of the second component and hence the second component with respect to the vehicle build volume.

13. The method of any of claims 7 to 12 wherein moving the interface node (900) using the robotic arm to position the locating element at the locating position comprises:
using the robotic arm to move the interface node in 6 degrees of freedom to drive the interface node such that the locating element is moved to the locating position.

## Patentansprüche

1. Schnittstellenknoten (100; 600; 700; 800; 900) zum Ermöglichen der Verwendung eines Roboterarms als rekonfigurierbare Vorrichtung für die Fahrzeugherstellung, wobei der Schnittstellenknoten umfasst:
ein Befestigungselement (110; 710; 810) zum Befestigen des Schnittstellenknotens an dem Roboterarm;
ein erstes Positionierungselement umfassend eine ebene Oberfläche (120, 620; 920), wobei die ebene Oberfläche zum Positionieren eines ersten Merkmals eines Bauteils (980) eines Fahrzeugs geeignet ist, wobei das erste Merkmal eine Fläche (985) eines Bauteils eines Fahrzeugs umfasst;
eine Wand (140), die sich von der ebenen Oberfläche aus und im Wesentlichen um diese herum erstreckt, wobei die Wand die ebene Oberfläche (120, 620; 920) mit dem Befestigungselement (110; 710; 810) verbindet, wobei die Wand (140) ein zweites Positionierungselement definiert, wobei das zweite Positionierungselement zum Positionieren eines zweiten Merkmals eines Bauteils eines Fahrzeugs geeignet ist; **dadurch gekennzeichnet, dass** der Schnittstellenknoten umfasst:
ein drittes Positionierungselement, das ein oder mehrere Löcher (130) in der ebenen Oberfläche (120, 620; 920) umfasst, wobei jedes Loch des einen oder der mehreren Löcher (130) zum Positionieren eines dritten Merkmals eines Bauteils eines Fahrzeugs geeignet ist und das dritte Merkmal eines Bauteils eines Fahrzeugs einen Punkt eines Fahrzeugbauteils umfasst.

2. Schnittstellenknoten (100; 600; 700; 800; 900) nach Anspruch 1, wobei:
das zweite Merkmal eines Bauteils eines Fahrzeugs ist eine Kante (501) eines Bauteils (500) eines Fahrzeugs ist;
die ebene Oberfläche kreisförmig (120) ist;
die Wand zylindrisch (140) ist; und
das zweite Positionierungselement die zylindrische Wand (140) ist und eine Tangente an die zylindrische Wand verwendet werden kann, um die Kante des Bauteils eines Fahrzeugs zu positionieren.

3. Schnittstellenknoten (100; 600; 700; 800; 900) nach einem der Ansprüche 1 bis 2, wobei:
das zweite Merkmal eines Bauteils eines Fahrzeugs eine Ecke eines Bauteils eines Fahrzeugs ist;
die ebene Oberfläche ein Rechteck (620) ist;
die Wand ein rechteckiges Prisma (640) ist; und
das zweite Positionierungselement eine Ecke an der Wand (641) oder eine Ecke ist, die die ebene Oberfläche mit der Wand verbindet (642), wobei die Ecke an der Wand (641) oder die die ebene Oberfläche und die Wand verbindet (642) verwendet werden kann, um die Ecke des Fahrzeugbauteils zu positionieren.

4. Schnittstellenknoten (100; 600; 700; 800; 900) nach einem der Ansprüche 1 bis 3, wobei:
das Befestigungselement (110; 710) sich auf einer der flachen Oberfläche (120) gegenüberliegenden Seite des Schnittstellenknotens befindet.

5. Schnittstellenknoten (100; 600; 700; 800; 900) nach einem der Ansprüche 1 bis 4, wobei das Befestigungselement umfasst:
eine Klemmstelle (104; 704; 804) zum Festklemmen des Schnittstellenknotens am Roboterarm; und
eine Bezugsfläche (102; 702; 802) zum Sicherstellen eines bekannten Schnittpunkts zwischen dem Roboterarm und dem Schnittstellenknoten (100; 600; 700; 800; 900).

6. Vorrichtung zur Verwendung als rekonfigurierbare Stütze für die Fahrzeugherstellung, wobei die Vorrichtung umfasst:
einen Roboterarm, wobei der Roboterarm in 6 Freiheitsgraden bewegt werden kann; und
einen Schnittstellenknoten (100; 600; 700; 800; 900) nach einem der Ansprüche 1 bis 5, wobei der Schnittstellenknoten über das Befestigungselement des Schnittstellenknotens mit dem Roboterarm verbunden ist.

7. Verfahren (200) zum Positionieren eines Bauteils (980) eines Fahrzeugs relativ zu einem Fahrzeugbauvolumen (990), wobei das Verfahren umfasst:
Identifizieren (202) eines ersten Merkmals des Bauteils (980), wobei das erste Merkmal des Bauteils (980) an einer gewünschten Position relativ zum Fahrzeugbauvolumen (990) positioniert werden muss;
Auswählen (206) eines ersten Positionierungselements eines Schnittstellenknotens (100; 900), der mit einem Roboterarm verbunden ist, wobei der Schnittstellenknoten (900) ein oder mehrere Positionierungselemente (120, 130, 140; 620, 641, 642; 920) umfasst, wobei jedes Positionierungselement des einen oder der mehreren Positionierungselemente (120, 130, 140; 620, 641, 642; 920) zum Positionieren eines Merkmals einer Komponente des Fahrzeugs dient und das erste Positionierungselement aus dem einen oder den mehreren Positionierungselementen (120, 130, 140; 620, 641, 642; 920) ausgewählt wird, um für die Positionierung des ersten Merkmals des Bauteils (980) geeignet zu sein;
Bestimmen (208) einer Positionierungsposition für das erste Positionierungselement auf der Grundlage der gewünschten Position des ersten Merkmals des Bauteils (980);
Bewegen (210) des Schnittstellenknotens (100; 900) unter Verwendung des Roboterarms, um das erste Positionierungselement an der Positionierungsposition zu positionieren; und
Positionieren (212) des Bauteils (980) relativ zum Fahrzeugbauvolumen (990) unter Verwendung des ersten Positionierungselements, um das erste Merkmal des Bauteils (980) und damit das Bauteil (980) in Bezug auf das Fahrzeugbauvolumen (990) zu positionieren, wobei:
das eine oder die mehreren Positionierungselemente mindestens eines von einer ebenen Oberfläche (120; 620), einer Ecke (641; 642), einem Loch (130), einer kreisförmigen Wand (140) und einer Schale umfassen;
das erste Merkmal des Bauteils mindestens eines von einer Fläche, einer Ecke, einem Punkt, einer Kante (501) und einem Kegel umfasst; und
das Auswählen (206) des ersten Positionierungselements des einen oder der mehreren Positionierungselemente auf dem Schnittstellenknoten basierend auf dem ersten Merkmal des Bauteils umfasst:
wenn das erste Merkmal des Bauteils eine Fläche ist, Auswählen einer flachen Oberfläche (120; 620) des Schnittstellenknotens als das erste Positionierungselement;
wenn das erste Merkmal des Bauteils eine Ecke ist, Auswählen einer Ecke (641; 642) des Schnittstellenknotens als das erste Positionierungselement;
wenn das erste Merkmal des Bauteils ein Punkt ist, Auswählen eines Lochs (130) des Schnittstellenknotens als erstes Positionierungselement;
wenn das erste Merkmal des Bauteils eine Kante (501) ist, Auswählen einer kreisförmigen Wand (140) des Schnittstellenknotens als erstes Positionierungselement; und
wenn das erste Merkmal des Bauteils ein Kegel ist, Auswählen einer Schale des Schnittstellenknotens als erstes Positionierungselement.

8. Verfahren (200) nach Anspruch 7, wobei das Positionieren des Bauteils relativ zum Fahrzeugbauvolumen ferner umfasst:
Verwenden des Positionierungselements, um das Bauteil in der gewünschten Position zu halten.

9. Verfahren (200) nach Anspruch 8, wobei:
das erste Merkmal eine Fläche (985) umfasst;
das erste Positionierungselement eine flache Oberfläche (920) umfasst; und
das Verwenden des ersten Positionierungselements zum Halten der Komponente in der gewünschten Position das Halten der Fläche der Komponente auf der flachen Oberfläche des Schnittstellenknotens umfasst.

10. Verfahren (200) nach Anspruch 8 oder Anspruch 9, wobei:
das erste Merkmal ein Loch umfasst;
das erste Positionierungselement ein Schraubenloch (130) umfasst; und
das Verwenden des ersten Positionierungselements zum Halten des Bauteils in der gewünschten Position das Verwenden einer Schraubverbindung zum Befestigen des Bauteils an dem Schnittstellenknoten über das Loch und das Schraubenloch umfasst.

11. Verfahren (200) nach einem der Ansprüche 7 bis 10, ferner umfassend:
Befestigen der Komponente (980) an dem Fahrzeugbauvolumen (990), so dass die Komponente (980) von dem Fahrzeugbauvolumen (990) getragen wird; und
Bewegen des Schnittstellenknotens (900) unter Verwendung des Roboterarms von der Positionierungsposition weg.

12. Verfahren (200) nach einem der Ansprüche 7 bis 11, ferner umfassend:
Identifizieren (202) eines zweiten Merkmals einer zweiten Komponente, die relativ zum Fahrzeugbauvolumen an einer zweiten gewünschten Position angeordnet werden muss;
Auswahl (206) eines zweiten Positionierungselements aus dem einen oder den mehreren Positionierungselementen (120, 130, 140; 620, 641, 642; 920) auf dem Schnittstellenknoten (900) basierend auf dem zweiten Merkmal der zweiten Komponente;
Bestimmen (208) einer zweiten Positionierungsposition für das zweite Positionierungselement auf der Grundlage der zweiten gewünschten Position;
Bewegen (210) des Schnittstellenknotens (900) unter Verwendung des Roboterarms, um das zweite Positionierungselement an der zweiten Positionierungsposition zu positionieren; und
Positionieren (212) der zweiten Komponente relativ zum Fahrzeugbauvolumen unter Verwendung des zweiten Positionierungselements, um das zweite Merkmal der zweiten Komponente und damit die zweite Komponente in Bezug auf das Fahrzeugbauvolumen zu positionieren.

13. Verfahren nach einem der Ansprüche 7 bis 12, wobei das Bewegen des Schnittstellenknotens (900) unter Verwendung des Roboterarms zum Positionieren des Positionierungselements an der Positionierungsposition umfasst:
Verwenden des Roboterarms zum Bewegen des Schnittstellenknotens in 6 Freiheitsgraden, um den Schnittstellenknoten so anzutreiben, dass das Positionierungselement an die Positionierungsposition bewegt wird.

## Revendications

1. Nœud d'interface (100 ; 600 ; 700 ; 800 ; 900) destiné à permettre à un bras robotique d'être utilisé comme accessoire reconfigurable pour la fabrication d'un véhicule, le nœud d'interface comprenant :
un organe de fixation (110 ; 710 ; 810) pour la fixation du nœud d'interface au bras robotique ;
un premier organe de positionnement comprenant une surface plane (120, 620 ; 920), dans lequel la surface plane convient au positionnement d'un premier élément d'un composant (980) d'un véhicule, dans lequel le premier élément comprend une face (985) d'un composant d'un véhicule ;
une paroi (140) s'étendant à partir de la surface plane et sensiblement autour de celle-ci, la paroi reliant la surface plane (120, 620 ; 920) à l'organe de fixation (110 ; 710 ; 810), dans lequel la paroi (140) définit un deuxième organe de positionnement, le deuxième organe de positionnement convenant au positionnement d'un deuxième élément d'un composant d'un véhicule ; **caractérisé en ce que** le nœud d'interface comprend :
un troisième organe de positionnement comprenant un ou plusieurs trous (130) dans la surface plane (120, 620 ; 920), dans lequel chaque trou parmi le ou les trous (130) convient au positionnement d'un troisième élément d'un composant d'un véhicule, et le troisième élément d'un composant d'un véhicule comprend un point d'un composant d'un véhicule.

2. Nœud d'interface (100 ; 600 ; 700 ; 800 ; 900) selon la revendication 1, dans lequel :
le deuxième élément d'un composant d'un véhicule est un bord (501) d'un composant (500) d'un véhicule ;
la surface plane est circulaire (120) ;
la paroi est cylindrique (140) ; et
le deuxième organe de positionnement est la paroi cylindrique (140) et une tangente à la paroi cylindrique peut être utilisée pour positionner le bord du composant d'un véhicule.

3. Nœud d'interface (100 ; 600 ; 700 ; 800 ; 900) selon l'une quelconque des revendications 1 à 2, dans lequel :
le deuxième élément d'un composant d'un véhicule est un coin d'un composant d'un véhicule ;
la surface plane est un rectangle (620) ;
la paroi est un prisme rectangulaire (640) ; et
le deuxième organe de positionnement est un coin sur la paroi (641) ou un coin reliant la surface plane à la paroi (642), dans lequel le coin sur la paroi (641) ou reliant la surface plane et la paroi (642) peut être utilisé pour positionner le coin du composant d'un véhicule.

4. Nœud d'interface (100 ; 600 ; 700 ; 800 ; 900) selon l'une quelconque des revendications 1 à 3, dans lequel :
l'organe de fixation (110 ; 710) se trouve sur un côté opposé du nœud d'interface par rapport à la surface plane (120).

5. Nœud d'interface (100 ; 600 ; 700 ; 800 ; 900) selon l'une quelconque des revendications 1 à 4, dans lequel l'organe de fixation comprend :
un emplacement de serrage (104 ; 704 ; 804) pour le serrage du nœud d'interface au bras robotique ; et
une face de référence (102 ; 702 ; 802) permettant d'assurer un point d'interface connu entre le bras robotique et le nœud d'interface (100 ; 600 ; 700 ; 800 ; 900).

6. Dispositif destiné à être utilisé comme support reconfigurable pour la fabrication d'un véhicule, le dispositif comprenant :
un bras robotique, dans lequel le bras robotique peut être déplacé selon 6 degrés de liberté ; et
un nœud d'interface (100 ; 600 ; 700 ; 800 ; 900) selon l'une quelconque des revendications 1 à 5, dans lequel le nœud d'interface est relié au bras robotique par l'intermédiaire de l'organe de fixation du nœud d'interface.

7. Procédé (200) pour le positionnement d'un composant (980) d'un véhicule par rapport à un volume de construction du véhicule (990), le procédé comprenant :
l'identification (202) d'un premier élément du composant (980), dans lequel le premier élément du composant (980) doit être positionné à une position souhaitée par rapport au volume de construction du véhicule (990) ;
la sélection (206) d'un premier organe de positionnement d'un nœud d'interface (100 ; 900) relié à un bras robotique, dans lequel le nœud d'interface (900) comprend un ou plusieurs organes de positionnement (120, 130, 140 ; 620, 641, 642 ; 920), dans lequel chaque organe de positionnement du ou des organes de positionnement (120, 130, 140 ; 620, 641, 642 ; 920) est destiné au positionnement d'un élément d'un composant du véhicule et le premier organe de positionnement est choisi parmi le ou les organes de positionnement (120, 130, 140 ; 620, 641, 642 ; 920) pour convenir au positionnement du premier élément du composant (980) ;
la détermination (208) d'une position de positionnement pour le premier organe de positionnement en fonction de la position souhaitée du premier élément du composant (980) ;
le déplacement (210) du nœud d'interface (100 ; 900) à l'aide du bras robotique pour placer le premier organe de positionnement à la position de positionnement ; et
la mise en place (212) du composant (980) par rapport au volume de construction du véhicule (990) à l'aide du premier organe de positionnement pour positionner le premier élément du composant (980) et donc le composant (980) par rapport au volume de construction du véhicule (990), dans lequel :
le ou les organes de positionnement comprennent au moins l'un parmi une surface plane (120 ; 620), un coin (641 ; 642), un trou (130), une paroi circulaire (140) et une cavité ;
le premier élément du composant comprend au moins l'un parmi une face, un coin, un point, un bord (501) et un cône ; et
la sélection (206) du premier organe de positionnement parmi le ou les organes de positionnement sur le nœud d'interface en fonction du premier élément du composant comprend :
si le premier élément du composant est une face, la sélection d'une surface plane (120 ; 620) du nœud d'interface comme premier organe de positionnement ;
si le premier élément du composant est un coin, la sélection d'un coin (641 ; 642) du nœud d'interface comme premier organe de positionnement ;
si le premier élément du composant est un point, la sélection d'un trou (130) du nœud d'interface comme premier organe de positionnement ;
si le premier élément du composant est un bord (501), la sélection d'une paroi circulaire (140) du nœud d'interface comme premier organe de positionnement ; et
si le premier élément du composant est un cône, la sélection d'une cavité du nœud d'interface comme premier organe de positionnement.

8. Procédé (200) selon la revendication 7, dans lequel la mise en place du composant par rapport au volume de construction du véhicule comprend en outre :
l'utilisation de l'organe de positionnement pour soutenir le composant dans la position souhaitée.

9. Procédé (200) selon la revendication 8, dans lequel :
le premier élément comprend une face (985) ;
le premier organe de positionnement comprend une surface plane (920) ; et
l'utilisation du premier organe de positionnement pour soutenir le composant dans la position souhaitée comprend le soutien de la face du composant sur la surface plane du nœud d'interface.

10. Procédé (200) selon la revendication 8 ou la revendication 9, dans lequel :
le premier élément comprend un trou ;
le premier organe de positionnement comprend un trou de vis (130) ; et
l'utilisation du premier organe de positionnement pour soutenir le composant dans la position souhaitée comprend l'utilisation d'un raccord fileté pour fixer le composant au nœud d'interface par l'intermédiaire du trou et du trou de vis.

11. Procédé (200) selon l'une quelconque des revendications 7 à 10, comprenant en outre :
la fixation du composant (980) au volume de construction du véhicule (990) de sorte que ledit composant (980) est soutenu par le volume de construction du véhicule (990) ; et
le déplacement du nœud d'interface (900) à l'écart de la position de positionnement à l'aide du bras robotique.

12. Procédé (200) selon l'une quelconque des revendications 7 à 11, comprenant en outre :
l'identification (202) d'un deuxième élément d'un second composant qui doit être positionné dans une seconde position souhaitée par rapport au volume de construction du véhicule ;
la sélection (206) d'un second organe de positionnement parmi le ou les organes de positionnement (120, 130, 140 ; 620, 641, 642 ; 920) sur le nœud d'interface (900) en fonction du deuxième élément du second composant ;
la détermination (208) d'une seconde position de positionnement pour le second organe de positionnement en fonction de la seconde position souhaitée ;
le déplacement (210) du nœud d'interface (900) à l'aide du bras robotisé pour placer le second organe de positionnement à la seconde position de positionnement ; et
la mise en place (212) du second composant par rapport au volume de construction du véhicule à l'aide du second organe de positionnement pour positionner le deuxième élément du second composant et donc le second composant par rapport au volume de construction du véhicule.

13. Procédé selon l'une quelconque des revendications 7 à 12, dans lequel le déplacement du nœud d'interface (900) à l'aide du bras robotisé pour placer l'organe de positionnement à la position de positionnement comprend :
l'utilisation du bras robotique pour déplacer le nœud d'interface selon 6 degrés de liberté afin d'entraîner le nœud d'interface de sorte que l'organe de positionnement est déplacé vers la position de positionnement.
